# EUROPÄISCHE PATENTSCHRIFT

(11) **EP 3 262 381 B1**
(45) Veröffentlichungstag und Bekanntmachung des Hinweises auf die Patenterteilung: **28.11.2018**
(21) Anmeldenummer: 16705780.1
(22) Anmeldetag: 22.02.2016
(51) Int. Cl.: G01D 5/34

(54) **VORRICHTUNG ZUR MESSUNG VON DREHWINKELN IN ZÄHLWERKEN UND MEHRSTUFIGEN DREHGEBERN SOWIE ZUGEHÖRIGE SENSOREN**
DEVICE FOR MEASURING ANGLES OF ROTATION IN COUNTERS AND MULTIPHASE ROTARY ENCODERS AND ASSOCIATED SENSORS
DISPOSITIF DE MESURE D'ANGLES DE ROTATION DANS DES COMPTEURS ET DES CODEURS ROTATIFS À PLUSIEURS NIVEAUX AINSI QUE CAPTEURS ASSOCIÉS

(30) Priorität: 25.02.2015 DE 102015102709; 20.05.2015 DE 102015107908
(43) Veröffentlichungstag der Anmeldung: 03.01.2018
(73) Patentinhaber: Grau, Günter, 46282 Dorsten (DE)
(72) Erfinder: Grau, Günter, 46282 Dorsten (DE)
(74) Vertreter: Gottschald Patentanwälte Partnerschaft mbB
(86) Internationale Anmeldenummer: PCT/EP2016/053656
(87) Internationale Veröffentlichungsnummer: WO 2016/135088

(56) Entgegenhaltungen:
- EP-A2- 2 631 606
- DE-A1-102005 031 966
- US-A- 5 815 269
- US-A1- 2005 002 032

## Beschreibung

### Erfindungsgebiet

Die vorliegende Erfindung betrifft das Gebiet von Vorrichtungen zur Messung des Zustandes von Zählern und mehrstufigen Drehgebern sowie zugehörige Sensoren. Speziell betrifft die Erfindung eine Vorrichtung mit mehr als einem drehbaren Rad, mindestens einer Lichtquelle und mehr als einem Polarisationssensor sowie eine Vorrichtung mit mehr als einem drehbaren Rad und je mit diesen mechanisch über ein Verhältnis von mindestens 2:1 verbundenen Mess-Rädern, mindestens einer Lichtquelle und mehr als einem Polarisationssensor. Ferner betrifft die Erfindung eine Verwendung einer Vorrichtung zur Messung von Drehwinkeln und/oder Umdrehungen.

### Hintergrund

In vielen Anwendungen genügt es nicht, Drehwinkel auf z.B. eine halbe oder volle Umdrehung bestimmen zu können. Um eine eindeutige Messung von mehreren Umdrehungen zu erfassen, beispielsweise in einem Stromzähler oder der Spindel eines Linearantriebs, können neben elektronischen Zähl Vorrichtungen, die auf den Signalen eines einfachen Winkelmessers aufbauen auch mechanische Zähler und Getriebe verwendet werden. Diese haben den Vorteil, dass sie auch ohne Energiezufuhr den Zählerstand behalten und sogar ohne Energiezufuhr zur Sensorik weiterzählen. Dies kann sehr wichtig sein, wenn sich im Fehlerfall eine träge Maschine weiterbewegt, während die Sensorik durch Stromausfall nicht funktioniert, oder wenn der Zustand einer Maschine im ausgeschalteten Zustand verändert wird.

Im Folgenden wird nicht nur vom Zustand einer Maschine, sondern gleichbedeutend auch vom Zustand der Vorrichtung gesprochen, d.h. dem Zustand des Zählers oder Getriebes. Dieser ist etwa durch die Messung der individuellen Drehwinkel sämtlicher Räder eines Zählwerks oder Zahnräder eines Getriebes beschrieben.

Zählwerke finden weiterhin Anwendung in Linearsensoren, beispielsweise Seilzug-Wegmessern, um deren Messbereich zu erweitern. In der Regel erlauben diese keine unmittelbare manuelle Auswertung des Zustandes, weil Kompaktheit und Aufwand der elektronischen Zählstandserfassung bei manuell ablesbaren Vorrichtungen noch größer ist als bei der elektronischen Auswertung, so dass hier entweder rein elektronisch oder rein manuell lesbare Lösungen existieren.

Manuell ablesbare bzw. mechanische Zählwerke sind allerdings in vielen Bereichen von Interesse, weil sie sehr wartungs- und risikoarm und unabhängig von zusätzlicher Stromversorgung arbeiten sowie eine einfache Kontrolle der Funktion bzw. des Zählerstandes ermöglichen. Beispiele sind etwa Gas- und Wasseruhren, bei denen eine Elektrifizierung am ehesten mit Batteriebetrieb oder durch Energy-Harvesting denkbar wäre, jedoch verbunden mit hohen Kosten und einem höheren Wartungsaufwand sowie ggfs. Sicherheitsproblemen durch erhöhte Gefahr von Explosionen oder Leckage. Auch bei den erwähnten Seilzuggebem dürfte es bei manchen Applikationen einen Mehrwert geben, wenn der Zählwert nicht nur rein elektronisch, sondern auch visuell am Zähler abgelesen werden könnte, selbst wenn der Zähler stromlos ist.

Die Erfassung von Drehwinkeln bei mehrstelligen Zählwerken und in Getrieben von Multiturn- Drehgebern ist derzeit mit einem hohen Aufwand verbunden. In der Regel wird jedes Zählrad bzw. jedes Getrieberad der Vorrichtung mit einem eigenständigen Absolutwert- Winkelsensor ausgestattet, so dass z.B. eine Vielzahl von Encoderscheiben, kollimierten Lichtquellen und präzise justierten mehrspurigen Sensoren erforderlich ist, die zudem miteinander kommunizieren müssen, um Mehrdeutigkeiten durch Getriebespiel etc. zu eliminieren. Dies ist ein erheblicher Aufwand und macht solche Systeme teuer.

Der Grund für diese komplizierte Art des Aufbaus ist darin zu suchen, dass herkömmliche Winkelsensoren nur auf kurze und konstante Distanz zuverlässig messen können. So ist es kaum möglich, das Feld einer magnetischen Codescheibe von z.B. 1cm Durchmesser aus 1cm Distanz mit guter Genauigkeit abzulesen, weil das Magnetfeld in dieser Distanz auf sehr kleine Werte abgefallen ist. Würde man mehrere Magnetscheiben hintereinander anordnen, würden die Signale sich gegenseitig stören. Signale von klassischen optischen Encodern (transmissiv oder reflektiv mit mehrspurigen Codescheiben) lassen sich ebenfalls nur mit hohem Justageaufwand und präziser Optik aus größerem Abstand auslesen, weil Streulicht und Messfehler durch Fehljustage schnell überhand nehmen. In begrenztem Maße wird dies jedoch durchgeführt. So beschreibt EP143354 die Überlagerung von Signalen zweier Getriebestufen. Eine noch weitergehende mehrstufige

Überlagerung erzeugt jedoch eine schnell wachsende Komplexität des Aufbaus. In EP1457762 wird der Abstand verschiedener Codescheiben zum jeweiligen Sensor durch zylinderförmige Elemente mit unterschiedlichen Radien auf den für einfache Encoder üblichen Abstand reduziert. Dies erfordert eine Vielzahl von passgenauen Elementen und deren Assemblierung zu komplizierten dreidimensionalen Gebilden und erlaubt keine einfache Kaskadierung zu höheren Stufenzahlen mit einem Baukastensystem.

EP 2 631 606 A2 offenbart eine weitere ähnliche Vorrichtung zur Erfassung von Drehwinkeln an einem rotierenden Bauteil.

Es ist eine Aufgabe der vorliegenden Erfindung, den Aufbau von elektronisch auslesbaren Vorrichtungen und Multiturn-Drehgebem zu vereinfachen.

### Offenbarung der Erfindung

Die zuvor hergeleitete und aufgezeigte Aufgabe wird gelöst durch eine Vorrichtung gemäß Anspruch 1. Die Aufgabe wird auch gelöst durch eine Verwendung gemäß Anspruch 16. Ausgestaltungen sind Gegenstand der Unteransprüche.
Gemäß einer ersten Lehre der vorliegenden Erfindung wird die Aufgabe durch eine Vorrichtung mit mindestens einem drehbaren Rad, mindestens einer Lichtquelle und mindestens einem Polarisationssensor gelöst, wobei das Rad zumindest teilweise transparent und polarisationserhaltend ist, wobei Teile des Rades als Polfilter ausgestaltet sind, wobei von der Lichtquelle ausgehendes Licht durch das Polfilter polarisierbar ist und vom Polarisationssensor empfangbar ist. Insbesondere wir die Aufgabe gelöst durch eine Vorrichtung mit mehr als einem drehbaren Rad, mindestens einer Lichtquelle und mehr als einem Polarisationssensor, wobei die Räder zumindest teilweise transparent und polarisationserhaltend sind, wobei Teile der Räder als Polfilter ausgestaltet sind, wobei sich die Räder zumindest teilweise überlappen, wobei von der Lichtquelle ausgehendes Licht durch die Polfilter der Räder polarisierbar und von den Polarisationssensoren empfangbar ist, wobei das Licht mehrere Räder durchdringen kann, wobei das von einem Polarisationssensor empfangene Licht nur durch eines der Polfilter polarisiert ist. Wenn es heißt, dass von der Lichtquelle ausgehendes Licht durch die Polfilter der Räder polarisierbar ist, ist gemeint, dass die transparenten und polarisationserhaltenden Bereiche sowie die als Polfilter gestalteten Bereiche verschiedener Räder derart dimensioniert und angeordnet, dass von der Lichtquelle ausgehendes Licht durch die Polfilter der Räder polarisierbar ist.
Das Rad kann ein Zähl-Rad einer Zählvorrichtung sein.
Durch die Absolutwertmessung nimmt das Polfilter einen kleineren Raum als eine Encoder- Codescheibe ein und kann mit einem kleineren Sensor gemessen werden. Die Justageempfindlichkeit sinkt, weil an jedem Ort des Polarisationsfilters dasselbe Signal gemessen werden kann. Da keine extrem fein ortsaufgelöste Messung erforderlich ist, kann das Signal über eine größere Distanz gemessen werden als dies bei optischen Encodern der Fall ist. Daher kann der Lichtstrahl auf dem Weg von der Lichtquelle zum Sensor mehrere zusätzliche transparente Hürden überwinden, solange diese die Polarisation des Lichts nicht signifikant verändern. Werden mehrere Räder auf einer gemeinsamen Achse montiert, so werden die jeweiligen Polfilter vorzugsweise unterschiedliche Radien aufweisen, damit eine gemeinsame Lichtquelle und ein gemeinsames Sensorarray bzw. nebeneinander liegenden Sensoren zur Messung verwendet werden können.

Im Unterschied zu optischen Encodern oder magnetischen Sensoren ist es folglich nicht notwendig, dass das Signal in unmittelbarer Nähe zum Sensor gewonnen wird, was etwa in EP 1 457 762 zu einer komplizierten und nichtplanaren Bauform führt. Im vorliegenden Fall können verschiedene Räder in ebener Form verwendet werden, wobei zwischen Lichtquelle und jeweiligem Polfilter bzw. diesem Polfilter und dem zugehörigen Sensor eine unterschiedliche Zahl von transparenten und polarisationserhaltenden Bereichen der anderen Räder liegen kann. Mit anderen Worten kann das Licht eines ersten Rades in der Nähe der Lichtquelle polarisiert werden und durchläuft eine Reihe von weiteren Rädern ohne Änderung des Polarisationszustandes, während das Licht eines letzten Rades in der Nähe des Sensors liegt und das unpolarisierte Licht nach Passieren der übrigen Räder erst kurz vor dem Sensor polarisiert wird. Die einzelnen Räder können dabei im Wesentlichen gleich aufgebaut sein, insbesondere als Scheibe realisiert sein. Bei Montage auf derselben Achse sollten vorteilhaft nur die Radien der jeweiligen Polfilter angepasst werden.

Transparenz ist dabei zumindest für den vom Sensor verwendeten Wellenlängenbereich erforderlich. Arbeitet der Sensor im infrarotbereich, kann die Scheibe für das Auge durchaus auch nicht transparent sein. Daher können z.B. beim Zählwerk die üblichen weißen Ziffern auf schwarzem Grund realisiert werden, die Räder jedoch insgesamt aus für Infrarotlicht des Sensors transparentem Material gefertigt sein.

Gemäß einer Ausgestaltung der erfindungsgemäßen Vorrichtung sind zusätzliche Codierungen auf mindestens einem Rad und dazu passende Sensoren vorgesehen, die einen über 360° eindeutigen Messbereich erzeugen.

Da die Polarisationsmessung 180°-periodisch ist, oftmals jedoch eine über 360° eindeutige Messung erforderlich ist, kann ein zusätzliches Signal zur Herstellung dieser Periodizität herangezogen werden. Dies kann auf vielfältige Weise geschehen. Ohne den Flächenverbrauch auf dem zu messenden Rad zu erhöhen, kann dem Polfilter eine Helligkeitsmodulation überlagert werden, etwa durch stärkere Absorption auf einem Halbkreis. In ähnlicher Weise kann auch eine Farbcodierung erfolgen, die eine Unterscheidung der beiden Halbkreise ermöglicht. Praktischer ist jedoch die Verwendung mindestens einer zweiten Signalspur auf dem Rad mit anderem Radius, die ähnlich einer binären Datenspur eines klassischen optischen Encoders gestaltet ist, etwa voll transparent und komplett blockierend. Die der Polarisation überlagerte Helligkeitsinformation kann mit dem Polarisationssensor selbst gemessen werden, während eine Farbinformation durch wellenlängenselektive Sensoren ermittelt werden kann. Wird eine zweite Signalspur verwendet, so ist ein weiterer Sensor neben dem Polarisationssensor sinnvoll. Da Helligkeit auch mit einem Polarisationssensor gemessen werden kann, kann dies allerdings auch ein zweiter

Polarisationssensor sein. In diesem Fall wäre auch eine Signalspur mit einem segmentierten Polfilter möglich. Zahlreiche Gestaltungs- Variationen führen zum gewünschten Ergebnis.

Gemäß einer Ausgestaltung wird ferner eine Vorrichtung mit mindestens einem drehbaren Rad und einem mit diesem mechanisch über ein Verhältnis von mindestens 2:1 verbundenen Mess-Rad vorgeschlagen, mit mindestens einer Lichtquelle und mindestens einem Polarisationssensor, wobei das Mess-Rad zumindest teilweise transparent und polarisationserhaltend ist, wobei Teile des Mess-Rades als Polfilter gestaltet sind, wobei von der Lichtquelle ausgehendes Licht durch das Polfilter polarisierbar ist und vom Polarisationssensor empfangbar ist. Insbesondere wird die Aufgabe gelöst durch eine Vorrichtung mit mehr als einem drehbaren Rad und je mit diesen mechanisch über ein Verhältnis von mindestens 2:1 verbundenen Mess-Rädern, mindestens einer Lichtquelle und mehr als einem Polarisationssensor, wobei die Mess-Räder zumindest teilweise transparent und polarisationserhaltend sind, wobei Teile der Mess- Räder als Polfilter gestaltet sind, wobei sich die Mess-Räder zumindest teilweise überlappen, wobei von der Lichtquelle ausgehendes Licht durch die Polfilter der Mess-Räder polarisierbar ist und von den Polarisationssensoren empfangbar ist, wobei das Licht mehrere Mess-Räder durchdringen kann, wobei das von einem Polarisationssensor empfangene Licht nur durch eines der Polfilter polarisiert ist. Wenn es heißt, dass von der Lichtquelle ausgehendes Licht durch die Polfilter der Räder polarisierbar ist, ist gemeint, dass die transparenten und polarisationserhaltenden Bereiche sowie die als Polfilter gestalteten Bereiche verschiedener Räder derart dimensioniert und angeordnet, dass von der Lichtquelle ausgehendes Licht durch die Polfilter der Räder polarisierbar ist.

Um die Erfordernis eines Hilfssignals für die 360°-Eindeutigkeit zu eliminieren, kann die Polarisationsmessung auf einem weiteren Rad, dem Messrad, erfolgen, wobei dieses maximal mit der halben Geschwindigkeit drehen darf wie das drehbare (Zähl-)Rad. Dies kann durch eine geeignete Verzahnung zwischen den Rädern sichergestellt werden. Wird für jedes Zähl-Rad eines Zählwerks ein eigenes Mess-Rad vorgesehen, ist ein Drehzahl Verhältnis von 2:1 besonders günstig. Dies ist etwa bei Anordnungen sinnvoll, wo verschiedene Zähl-Räder durch eine eigene Mechanik bzw. ein eigenes Getriebe miteinander verkoppelt sind. Bei dekadischen Zählwerken ist dabei das Drehzahlverhältnis meist 10:1, wobei die Zähl-Räder häufig durch Schrittgetriebe angetrieben werden. Die Kopplung zwischen Zähl-Rad und Mess-Rad kann durch eine einfache Verzahnung erfolgen.

Ist das Drehzahlverhältnis größer als 2:1, möglichst um einen ganzzahligen Faktor größer, so kann durch die Polarisationsmessung auf dem Mess-Rad eine über mehr als 360° Drehbereich des Zähl- Rades eindeutige Winkelmessung erfolgen. Dies ist besonders vorteilhaft bei Multiturn-Drehgebern, die oft mit mehrstufigen Getrieben ausgestattet sind.

Gemäß einer Ausgestaltung der zuvor beschriebenen Vorrichtungen
- sind mehrere Räder derart angeordnet, dass sie sich zumindest teilweise überlappen,
- sind die transparenten und polarisationserhaltenden Bereiche sowie die als Polfilter gestalteten Bereiche verschiedener Räder derart dimensioniert und angeordnet, dass von einer Lichtquelle ausgehendes Licht auch mehrere Räder durchdringen kann, wobei das von einem Polarisationssensor empfangene Licht nur durch eines der Polfilter polarisiert ist,
- ist an verschiedenen Stellen das von verschiedenen Rädern polarisierte Licht messbar.

Je nach mechanischer Auslegung der Räder können Polfilter und Hilfsspuren auf verschiedenen Radien bei gemeinsamer Drehachse oder aber auf verschiedenen Drehachsen liegen. Dadurch lassen sich sehr kompakte Vorrichtungen bauen, bei denen Signale von verschiedenen Polfiltern und/oder Hilfsspuren nebeneinander messbar sind, ohne dass sich diese gegenseitig stören. Dies ermöglicht auch die Nutzung gemeinsamer Lichtquellen und mehrkanaliger Sensoren. Dass die Messung an Stellen stattfindet, an denen das Licht mehrere Räder durchdringen muss, ist natürlich nicht erforderlich. Es ist sowohl möglich, dass Mess-Räder außerhalb der Zähl-Räder liegen als auch, dass diese sich überlappen. Die mechanische Kopplung ist dabei vom Fachmann geeignet zu konstruieren, wobei neben Verzahnungen auch Zahnriemen und andere Konstruktionen mit gleicher Wirkung zum Einsatz kommen können. Da die Polarisationsmessung gleichermaßen on- und off-achsig funktioniert, ist auch eine Messung auf der Drehachse (Radius Null) möglich.

Gemäß einer Ausgestaltung der zuvor beschriebenen Vorrichtungen sind Symbole am Umfang eines Rades 180°-periodisch angebracht.

Bei Zählwerken wie z.B. dekadischen Zählern sind meist Ziffernsymbole 0...9 am Umfang eines Zähl-Rades angebracht, damit der Zustand des Zählwerks manuell ausgelesen werden kann. In diesem Fall wird eine 360°-Drehung benötigt, um den Zählbereich eines Rades zu durchlaufen, und die einzelnen Zähl-Räder sind entsprechend der Symbole meist 10:1 untersetzt. Um bei Verwendung von Polarisationssensoren auf Hilfssignale, Hilfsspuren oder zusätzliche untersetzte Räder verzichten zu können, ist eine Änderung der Zähl-Räder sinnvoll, bei der die Symbole 180°- periodisch angebracht sind, d.h. die Ziffernfolge 0...9 erscheint bei Drehung um 360° zweimal hintereinander. Entsprechend ist die Untersetzung der Zähl-Räder untereinander in diesem Fall um den Faktor 2 zu reduzieren, also typisch 5: 1 zu wählen. Es ist dabei unerheblich, wo und wie genau die Symbole angebracht sind. Auch ein mit Symbolen bedruckter Zahnriemen, der an das Zähl-Rad gekoppelt ist, erfüllt denselben Zweck, solange die ablesbaren Symbole bezogen auf das sich drehende Rad 180°-periodisch erscheinen und so eine eindeutige Messung mit einem 180°-periodischen Sensor erlauben.

Gemäß einer Ausgestaltung der zuvor beschriebenen Vorrichtungen verbindet ein Getriebe die Räder der Vorrichtung mit einem Drehzahlverhältnis von mindestens 2:1 so, dass über mehrere volle Umdrehungen des sich am schnellsten drehenden Rades auch aus 180°-periodischen Messwerten an mindestens einem Rad der Vorrichtung ein eindeutiger Drehwinkel über mehrere Umdrehungen ermittelbar ist.

Für die Winkelmessung über einen weit über 360° hinausgehenden Bereich, also eine Umdrehungsmessung, sind Getriebe mit hoher Untersetzung hilfreich, zudem auch mehrstufige Getriebe. Damit eine Umdrehungsmessung an einem Rad mit einem 180°-periodischen Sensor erfolgen kann, muss das nächste, von diesem Rad angetriebene Rad sich mit maximal der halben Drehzahl drehen. Eine deutlich höhere Untersetzung ist hilfreich, um den Zählbereich zu erweitern. Dabei sind ganzzahlige Vielfache von 2:1 besonders sinnvoll.

Gemäß einer Ausgestaltung der zuvor beschriebenen Vorrichtungen arbeitet die Vorrichtung mechanisch.

Wird der Zustand der Vorrichtung durch ein mechanisch arbeitendes Getriebe verändert, so arbeitet es auch ohne elektrische Energie, d.h. wenn die Sensorik nicht in Betrieb ist. Dies ist einerseits hilfreich, um den Zustand der Vorrichtung auch über einen langen Zeitraum hinweg zu erhalten (zu speichern), andererseits auch, um den Zustand auch ohne elektrische Energie verändern zu können. Dies kann bei schweren Maschinen wichtig sein, die z.B. nach einem Stromausfall aufgrund ihrer Trägheit noch weiterlaufen.

Gemäß einer Ausgestaltung der zuvor beschriebenen Vorrichtungen ist der Zustand der Vorrichtung auch ohne Elektrizität ablesbar.

Insbesondere wenn der Zustand der Vorrichtung mechanisch verändert und gespeichert wird ist es hilfreich, wenn der Zustand manuell Ausgelesen werden kann. Anwendungsbeispiele sind Gas- und Wasseruhren, die im Normalfall keine elektrische Energie zur Versorgung benötigen, aber jederzeit ablesbar sein sollen. Dabei ist das manuelle Ablesen von Jedermann auch ohne spezielles Gerät möglich, während ein Auslesen der Sensoren u.U. nur durch Wartungspersonal erfolgt.

Gemäß einer Ausgestaltung der zuvor beschriebenen Vorrichtung weist diese ein zumindest teilweise transparentes Gehäuse auf, wobei die Vorrichtung teilweise einem Medium ausgesetzt ist, während andere Teile durch das Gehäuse vor dem Medium geschützt sind.

Wenn das mechanische Zählwerk z.B. durch Wasser oder Gas angetrieben wird, ist es sinnvoll, elektrische Elemente wie Lichtquellen und Sensoren von diesem Medium getrennt zu halten. Dies kann bei der vorliegenden Vorrichtung durch optische Fenster in einem Gehäuse geschehen oder durch ein insgesamt transparentes Gehäuse. Neben Korrosionsschutz ist hier auch Explosionsschutz ein Vorteil. Weitere mechanische Kupplungen, etwa magnetische Kupplungen zwischen einem Flügelrad und der Vorrichtung sind natürlich ebenfalls denkbar, um auch das Getriebe der Vorrichtung mit den Rädem und Polfiltern vor dem Medium zu schützen.

Flügelrad meint hier das vom Medium angetriebene Rad mit Schaufeln, Kammern oder vergleichbaren Merkmalen.

Gemäß einer Ausgestaltung der zuvor beschriebenen Vorrichtungen werden die Sensordaten verschiedener Räder miteinander korreliert.

Bei mehrstufigen Getrieben bzw. mindestens zwei gekoppelten Rädern lässt sich vorteilhaft ausnutzen, dass die Polarisationsmessung eine Absolutwinkelmessung erlaubt, auch wenn diese 180°-periodisch ist. Wenn zwei gekoppelte Räder ein Drehzahlverhältnis von N:1 aufweisen, die Winkelmessung des langsameren Rades jedoch N-fach genauer ist als die des schnelleren Rades, kann die Position des schnelleren Rades eindeutig aus derjenigen des langsameren Rades ermittelt werden, d.h. die Messdaten sind nicht unabhängig voneinander. Die Korrelation der Messdaten von verschiedenen Rädern erlaubt, Aussagen über mechanisches Spiel zu gewinnen.

Auch bei einer weniger genauen Messung am langsameren Rad ist es möglich, ein Intervall für den möglichen Zustand des schnelleren Rades anzugeben. Umgekehrt ergibt sich für den Zustand des schnelleren Rades ein Satz von möglichen Zuständen des langsameren Rades. Diese Information kann dazu verwendet werden, die Sensorsignale gegenseitig zu kontrollieren und Kalibrationsdaten zu gewinnen. Dies ist u.U. bei sich sehr langsam drehenden und selten ausgelesenen Vorrichtungen hilfreich, da eine mechanische Bewegung zur Gewinnung von Kalibrationsdaten bei Zählwerken praktisch nicht möglich ist.

Gemäß einer Ausgestaltung der zuvor beschriebenen Vorrichtungen werden die Sensordaten mindestens eines Polarisationssensors mit mindestens der um die Untersetzung zum vorangehenden Rad höheren Auflösung als bezüglich der Umdrehungsmessung für das jeweilige Rad notwendig ermittelt, dadurch gekennzeichnet, dass Mittel bzw. Mechanismen vorhanden sind, die dazu geeignet sind, bei Ausfall eines Sensors und/oder einer Lichtquelle eine eindeutige Aussage über den Zustand der Vorrichtung aus den übrigen Sensordaten zu ermitteln.

Wie zuvor beschrieben lässt sich insbesondere aus den Messdaten der langsameren Räder auf den Zustand der schnelleren Räder eindeutig schließen. Dem sind einerseits Grenzen gesetzt durch mechanisches Spiel, aber auch durch begrenzte Auflösung und Genauigkeit der Polarisationsmessung. Da die Polarisationsmessung zunächst analoge Signale liefert, ist die Digitalisierung mit höherer Auflösung und Genauigkeit als mechanisch für die Positionsbestimmung erforderlich relativ einfach. Bei einer Untersetzung von N:1 muss das schnelle Rad auf N Positionen bestimmt werden. Für das langsamere Rad genügt es also, N mal mehr mögliche Positionen bestimmen zu können, um die Messdaten am schnelleren Rad überflüssig zu machen.

In diesem Fall liefert die Messung am langsameren Rad die Informationen für den Zustand auch des schnelleren Rades. Über mehr als zwei Stufen ist dieses Vorgehen nur begrenzt sinnvoll, da die erforderliche Messgenauigkeit und die Anforderungen an die Mechanik sehr hoch werden. Allerdings ist es möglich, durch eine hoch aufgelöste Winkelmessung und stark untersetzte Drehzahlen zwischen den Rädern die Zahl der Getriebestufen im Vergleich zu Encoderlösungen zu reduzieren, da der zusätzliche Aufwand für einige Bit mehr bei der Polarisationsmessung relativ niedrig ist.

Gemäß einer Ausgestaltung der zuvor beschriebenen Vorrichtung sind Justagefehler von Polfilter und/oder Sensor in einer mechanischen Referenzposition der Vorrichtung durch die Sensoren messbar und als Referenzsignal nichtflüchtig speicherbar.

Im Gegensatz zu optischen Encodern gibt es bei der Polarisationsmessung keine besonderen Justageanforderungen, d.h. Polfilter und Sensor können beliebig gegeneinander verschoben werden und auch der relative Winkel zwischen Sensor und z.B. Radiusstrahl des zu messenden Rades ist frei wählbar. Wenn Polfilter und Sensor allerdings eine willkürliche Orientierung aufweisen, wird dies als winkelverschobenes Mess-Signal sichtbar. Ein solcher Winkelfehler kann leicht durch Differenzbildung eliminiert werden, so dass durch eine Referenzmessung in einer mechanischen Referenzposition diese Winkelfehler für jeden Sensor ermittelt werden können. Diese können nichtflüchtig gespeichert und nachfolgende Messungen mit diesen Daten korrigiert werden. Vorteile kann das nicht nur bei der kaum vermeidbaren Positionierungenauigkeit haben, die ein Sensor gegenüber seinem Träger (Platine) hat, auch die winkeltreue Montage des Trägers gegenüber der übrigen Vorrichtung wird damit korrigiert. Besonders vorteilhaft ist allerdings, dass es bei der Justage der Polfilter auf den Rädern ebenfalls keine Rolle spielt, welchen relativen Winkel Polfilter und Rad gegeneinander haben, lediglich eine halbwegs um die Drehachse zentrierte Montage ist ratsam, damit ein schmalerer Polfilterring verwendet werden kann und mehrere Sensoren auf enger beieinanderliegenden Radien montiert werden können.

Gemäß einer Ausgestaltung der zuvor beschriebenen Vorrichtungen ist der Polarisationssensor eine Integrierte Schaltung.

Die Messung der Polarisationsinformation kann vorteilhaft durch eine Relativmessung von verschiedenen Signalen geschehen, die Photodioden mit individuell orientierten Polfiltern liefern. Besonders vorteilhaft werden vier jeweils 45° gegeneinander verdrehte Polfilter über je einem eigenen Photodetektor angeordnet. Bei Bestrahlung mit linear polarisiertem Licht, welches sich bezüglich seiner Polarisation um die Messachse dreht, liefern die Photodetektoren differentielle Sinus- und Kosinus-Signale, die sehr einfach und mit hoher Genauigkeit ausgewertet werden können. Dabei spielt die Intensität des Lichtstrahls und der Polarisationsgrad keine grosse Rolle, da nur relative Größen ausgewertet werden müssen. Bei der Realisierung als Integrierte Schaltung können diese unterschiedlichen Sensorfelder auf kleinstem Raum untergebracht werden, wobei insbesondere die Winkeltreue der untereinander verdrehten integrierten Polfilter sehr hoch ist. Die Integrierte Schaltung kann zusätzliche Funktionen übernehmen, etwa Kalibration, Kommunikation mit anderen Sensoren etc. Andere Anordnungen von integrierten Sensoren und Filtern können ebenso verwendet werden. Für die Integrierte Schaltung ist insbesondere die monolithische Integration in einem Standardprozeß, etwa einer CMOS-Technologie, geeignet, wobei sich mit Featuregrößen, die typisch für 130nm oder kleinere Technologien sind, auch im sichtbaren Bereich gute Ergebnisse erzielen lassen. Mit Strukturen, die in 180nm-Technologien gefertigt werden können, sind gute Ergebnisse zumindest im Infrarotbereich zu erzielen.

Gemäß einer weiteren Ausgestaltung wird die Aufgabe gelöst durch eine wie zuvor definierte Vorrichtung mit einem Sensorbereich für Polarisation und einem neben dem Sensorbereich für Polarisation angeordneten Sensorbereich für Helligkeit, wobei zur Auswertung der Helligkeitsinformation des Helligkeitssensors die im Polarisationssensor ermittelte Helligkeit als Referenzsignal verwendet wird.

Die Vorrichtung beschreibt einen kombinierten Polarisations- und Helligkeitssensor.

Relative Signalstärken werden gerne auch bei klassischen optischen Encodern eingesetzt, bei denen im Wesentlichen nur eine binäre Entscheidung hell/dunkel getroffen werden muss. Auch hier ist die zunächst unbekannte Helligkeit des einfallenden Lichts oder die Erkennung des Ausfalls der Lichtquelle Argument für eine differentielle Anordnung. Beim Encoder werden dazu allerdings zwei Signalspuren benötigt, welche eine inverse Codierung aufweisen. Wird ein Polarisationssensor mit einem zusätzlichen Helligkeitssensor kombiniert, so kann diese zweite digitale Spur eingespart werden, da die Summe der vom Polarisationssensor gemessenen Signale im Mittel konstant ist und (bei Vernachlässigung von Filterverlusten) in etwa der halben Helligkeit des unpolarisierten Lichts entspricht. Daher kann eine differentielle Information bereits aus dem Vergleich der auf der zusätzlichen helligkeitsmodulierten Spur gewonnenen Information mit dem im Polarisationssensor ermittelten Helligkeit gewonnen werden.

Gemäß einer weiteren Ausgestaltung wird die Aufgabe gelöst durch eine wie zuvor definierte Vorrichtung für Polarisationsmessung, wobei mehrere Sensorbereiche so angeordnet sind, dass Signale von mehreren unabhängigen Signalquellen messbar sind.

Die Vorrichtung beschreibt einen mehrkanaligen Sensor für Polarisationsmessung.

Während bei optischen Encodern die Zahl der Signalspuren hoch ist und sehr hohe Anforderungen an die Justage gestellt werden, geschieht die Polarisationsmessung im einfachsten Fall mit nur einer Spur und ggfs. einer Hilfsspur für die Erweiterung auf 360°. Daher kann der Polarisationssensor deutlich kleiner ausfallen als ein Encoder-Sensor. Diese Flächeneinsparung kann als Preisvorteil für den Einzel-Sensor genutzt werden. Es ergibt sich jedoch ein weiteres Einsparpotential, wenn die freigewordene Sensorfläche für weitere Sensorspuren verwendet wird, mit denen entweder dasselbe Signal redundant gemessen werden kann oder aber, besonders bei Verwendung mit Zählwerken oder Multiturn-Gebern, zur mehrkanaligen Messung des Winkels von verschiedenen Rädern.

Da in vielen Anwendungen die Drehzahlen der zu messenden Räder sehr niedrig ist, kann hierbei vorteilhaft auch eine gemeinsame Nutzung von elektronischen Komponenten (z.B. Analog-Digital- Wandlern) stattfinden.

Gemäß einer weiteren Ausgestaltung wird die Aufgabe gelöst durch eine wie zuvor definierte Vorrichtung mit mindestens einem Sensorbereich für Polarisation und mindestens einem daneben angeordneten Sensorbereich für Helligkeit, wobei zur Auswertung einer Helligkeitsinformation die von einem Polarisationssensor ermittelte Heiligkeit als Referenzsignal verwendet wird, wobei die Sensorbereiche so angeordnet sind, dass Signale von mehreren unabhängigen Signalquellen messbar sind.

Die Vorrichtung beschreibt einen mehrkanaligen Sensor mit mindestens einem Sensorbereich für Polarisation und mindestens einem daneben angeordneten Sensorbereich für Helligkeit.

Es ist möglich, die zur Messung der Polarisation verwendeten Sensoren auch zur Helligkeitsmessung heranzuziehen. Auch können zusätzliche Sensoren im Sensorbereich des Polarisationssensors untergebracht sein. Ohne eine räumliche Trennung ist es jedoch schwierig, Helligkeits- und Polarisationsinformationen ohne gegenseitige Beeinflussung zu messen. Wird auf einem Rad eine zusätzliche Signalspur als Hell/Dunkel-Markierung neben dem Polfilter angebracht, so wird man zweckmäßig beide Signale mit nebeneinander liegenden Sensorbereichen messen.

Gemäß einer weiteren Ausgestaltung wird die Aufgabe gelöst durch eine wie zuvor definierte Vorrichtung mit mindestens einem Sensor für Polarisation und einem Sensor für Farbe auf einer gemeinsam genutzten Sensorfläche.

Die Vorrichtung beschreibt einen kombinierten Polarisations- und Farbsensor.

Im Gegensatz zu einer starken Intensitätsmodulation, welche die Polarisationsmessung beeinträchtigen könnte, kann auch eine Farbinformation für die 360°-Erweiterung des Messbereichs verwendet werden. Eine solche kann auch im Bereich der Polarisationssensorik untergebracht werden und erfordert dann keine zusätzliche Fläche auf dem zu messenden Rad.

Wellenlängenabhängige Sensoren lassen sich z.B. durch verschieden tief liegende Halbleiterzonen oder optische Resonatoren oder Farbfilter über den Photodetektoren realisieren. Vorzugsweise werden entweder Wellenlängen verwendet, die keinen Einfluss auf die Polarisationsmessung haben (weil sie entweder nicht oder gleichermaßen polarisiert werden oder die Polarisationssensoren diese Wellenlänge gar nicht detektieren), oder es wird im Zeitmultiplex mal Polarisations- und mal Farbinformation gemessen.

Eine Wellenlängenmessung kann auch ohne zusätzliche Sensorfläche dadurch erfolgen, dass in Einfallsrichtung des Lichts unter den festen Polarisationsfiltern mehrere Photodetekturen hintereinander angeordnet sind. Dies funktioniert, da die Eindringtiefe von Licht in z.B. Silizium wellenlängenabhängig ist. Vorteilhaft kann der Sensor mit zwei Wellenlängen betrieben werden, für die sich ein ähnlich starkes Polarisationssignal ergibt. Dies kann auch durch geeignete Helligkeiten bei den jeweiligen Wellenlängen oder verschieden starke optische Dämpfung der Farben in der dem drehbaren Polfilter überlagerten Farbcodierung beeinflusst werden. Je größer die Differenz der Wellenlängen, desto größer die Verschiebung des Signaistroms zwischen gestapelten

Photodetektoren, die z.B. aus Diffusionszonen einerseits und implantierten Zonen andererseits bestehen können. Diese Anordnung ist flächeneffizienter als z.B. die Verwendung separater Sensoren mit eigenen Farbfiltern, wobei auch solche Anordnungen im Sinne der Erfindung sind. Auch zusätzliche gestapelte Photodioden ohne ein darüber liegendes festes Polfilter in unmittelbarer Nähe der Polarisationssensoren erfüllen den Zweck gleichermaßen.

Gemäß einer Ausgestaltung der zuvor beschriebenen Vorrichtungen wird die zur Messung erforderliche Energie drahtlos an die Vorrichtung übermittelt.

Werden mechanische Zählwerke eingesetzt, deren Zustand nur selten abgefragt wird, ist eine dauerhafte Versorgung mit elektrischer Energie nicht notwendig. Auch ein Batteriebetrieb oder die Verwendung von Energy Harvesting ist etwa bei Gas- und Wasseruhren nicht unbedingt sinnvoll. Wird ein Zählerstand nur sporadisch ermittelt, soll aber dennoch elektronisch erfasst werden, so kann für diesen Moment auch eine kurzzeitige Versorgung erfolgen, wobei man auf anfällige Steckverbindungen verzichten kann und die Energie etwa per Induktionsspulen oder durch eine Kombination Lichtquelle/Solarzelle übertragen kann.

Gemäß einer Ausgestaltung der zuvor beschriebenen Vorrichtungen werden die gemessenen Signale drahtlos von der Vorrichtung übermittelt.

Dient die elektronische Erfassung von Zählerständen im Wesentlichen der Beschleunigung und der Fehlervermeidung im Vergleich zum manuellen Ablesen, ist eine Übertragung der Messdaten per Funk oder moduliertem Licht sinnvoll. Insbesondere eine Funkübertragung kann auch über eine größere Distanz, also per Telemetrie erfolgen. Dadurch entfällt die Notwendigkeit, den auszulesenden Zähler in Augenschein nehmen zu müssen.

Die definierten Vorrichtungen, insbesondere die Vorrichtungen gemäß den Ansprüchen 11 bis 14, lassen sich vorteilhaft zur Bestimmung von Drehwinkeln und/oder Umdrehungen einsetzen.

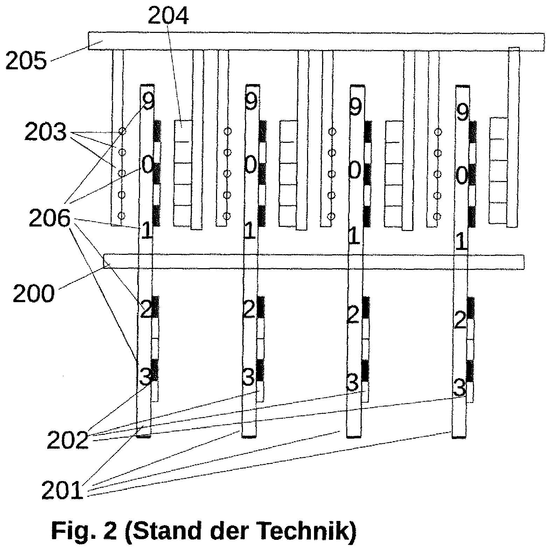

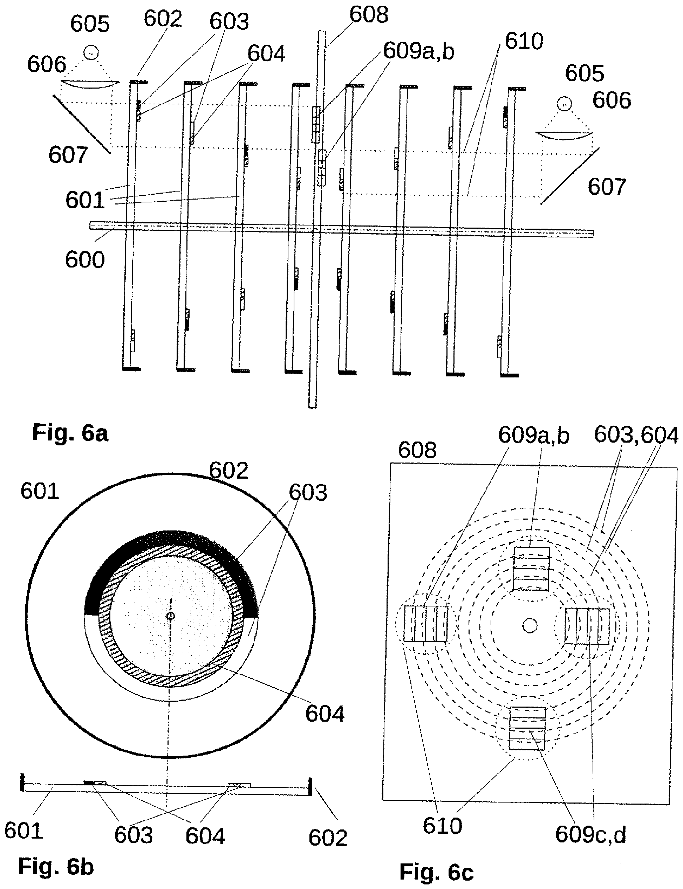

Die Erfindung wird im Folgenden anhand von Ausführungsbeispielen näher erläutert, wozu auf die beigefügten Zeichnungen Bezug genommen wird. Es zeigen die Figuren und Bezugszeichen:

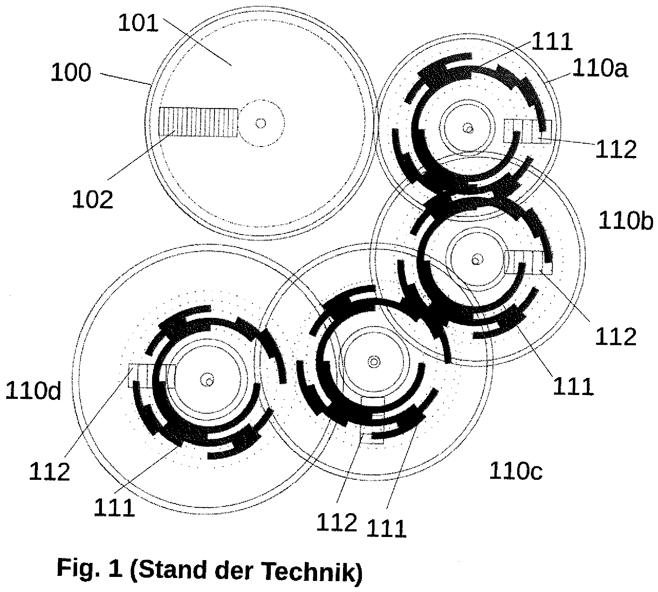

Fig. 1 a: vereinfachte Darstellung eines Zählwerks für Multiturn-Drehgeber mit Codescheiben;
   4-stufiges Getriebe mit 8: 1 -Untersetzungen und 5-spurigen Codescheiben (Stand der Technik)
   100 extern angetriebenes Hauptrad für die Drehwinkelerfassung innerhalb einer Umdrehung
   101 breiter Radiusbereich mit hochaufgelöster Codescheibe (nicht im Detail gezeigt)
   102 Sensorarray zur Abtastung der hochaufgelösten Codescheibe (z.B. 16 Bit)
   110a-d Getriebezahnräder für Multiturn-Messung
   111 Codescheibe für die Winkelmessung auf Getriebezahnrädern (hier 5 Bit)
   112 Sensorarray zur Abtastung einer Codescheibe 111
Fig. 2: vereinfachte Darstellung einer manuell ablesbaren Vorrichtung zum Zählen mit koaxialen Rädern (z.B. für Gasuhren), Beispiel für Zählbereich 0000...9999 (Stand der Technik)
   200 gemeinsame Welle
   201 Zählrad mit Symbolaufdruck am Umfang
   202 Codescheibe für optischen Encoder, hier mit 5 Bit
   203 Array von kollimierten Lichtquellen (z.B. LED mit Linse und Blende)
   204 Sensorarray für die Abtastung einer Codescheibe
   205 mechanische Halterung
   206 Symbole auf dem Umfang eines Zählrads (z.B. Ziffern 0...9)

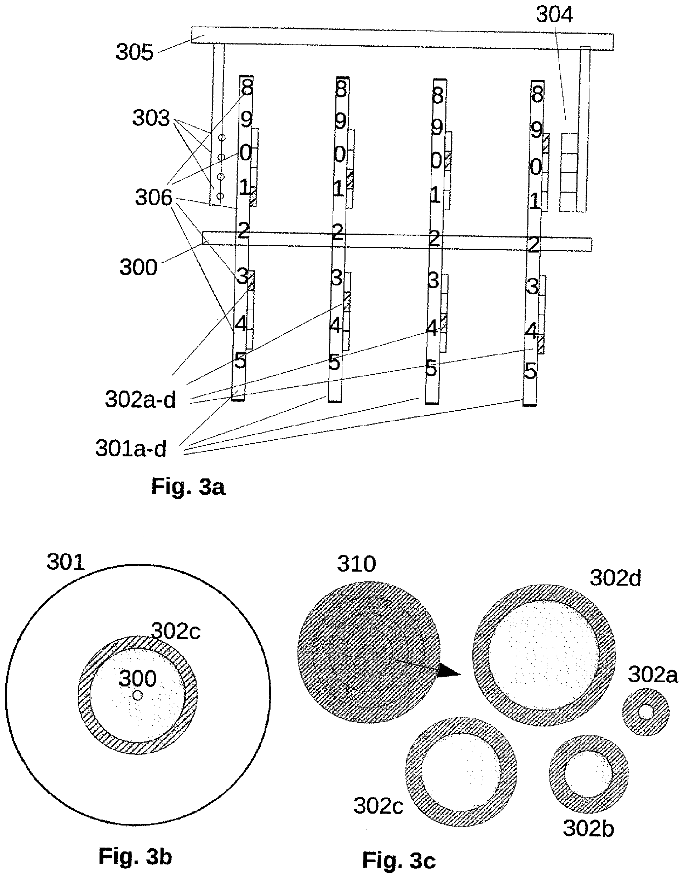

Fig. 3a: vereinfachte Darstellung einer manuell ablesbaren Vorrichtung zum Zählen mit koaxialen Rädern, ausgestattet mit Polarisationsfiltern und doppelter Symbolfolge auf dem Umfang
   300 gemeinsame Welle
   301a-d Zählrad mit doppeltem Symbolaufdruck am Umfang
   302a-d Polfilterringe mit unterschiedlichen Radien
   303 Array von kollimierten Lichtquellen (z.B. LED mit Linse und Blende)
   304 Array von Polarisationssensoren
   305 mechanische Halterung
   306 Symbole auf dem Unfang des Zählrads (z.B. Ziffern 0...9, 0...9)
Fig. 3b: Draufsicht auf eines der Zählräder 301 mit Polfilterring 302 und Bohrung 300
Fig. 3c: vorteilhafte Gewinnung von Polfilterringen 302a-d mit unterschiedlichen Radien z.B. durch Ausstanzen aus einer Polfilterfolie 310
Fig. 4: Einheit eines Zählwerks mit zusätzlichem 2:1 -untersetztem Zahnrad. Die Umdrehung des Zählrads kann eindeutig durch Polarisationsmessung geschehen, da das Polfilter nur eine halbe Umdrehung macht, wenn das Zählrad eine volle Umdrehung macht.
   400 Zählrad
   401 innere Stirnverzahnung
   402 zusätzliches Zahnrad mit doppelter Zahnzahl
   403 Polfilterring auf dem Zahnrad 404 mechanische Halterung
   410 Welle
   411 kurze Welle für das zusätzliche Zahnrad
Fig. 5: vereinfachte Darstellung eines Zählwerks für Multitum-Drehgeber unter Verwendung von Polarisationssensoren
   500 extern angetriebenes Hauptrad für die Drehwinkelerfassung innerhalb einer Umdrehung
   501 breiter Radiusbereich mit hochaufgelöster Codescheibe (nicht im Detail gezeigt)
   502 Sensorarray zur Abtastung der hochaufgelösten Codescheibe (z.B. 16 Bit)
   510a-d Getriebezahnräder für Multiturn-Messung
   511 Polfilterring für die Winkelmessung auf Getriebezahnrädern
   512 Sensoren zur Polarisationsmessung hinter 511
Fig. 6a: Vereinfachte Darstellung einer manuell ablesbaren Vorrichtung zum Zählen mit 8 koaxialen Rädern (Zählbereich 00000000...99999999), ausgestattet mit Polarisationsfiltern und zusätzlicher binärer Hilfsspur, dafür nur einfacher Symbolfolge auf dem Umfang
   600 gemeinsame Welle
   601 Zählrad mit normalem Symbolaufdruck am Umfang
   602 Symbole auf dem Umfang des Zählrads (z.B. Ziffern 0...9)
   603 Binäre Hilfsspuren (transparent/schwarz) für eindeutige Messung über 360°
   604 Polfilterringe mit unterschiedlichen Radien
   605 Lichtquellen, z.B. LED
   606 Kollimator (Linse)
   607 Spiegel oder Prisma
   608 mechanische Halterung für Sensoren, hier je ein Sensorarray auf der Vorder- und eines auf der Rückseite der Halterung
   609 Array von Polarisationssensoren und Helligkeitssensoren für Hilfsspuren
   610 Bereich der Ausleuchtung
Fig. 6b: Draufsicht auf eines der Zählräder
Fig. 6c: Mögliche Anordnung von Sensorarrays 609 auf der Halterung 608 zur Messung der Signale von einer Vielzahl von Spuren für Polarisations- und Helligkeitsmessung (603,604) mit angedeuteter Ausleuchtung 610

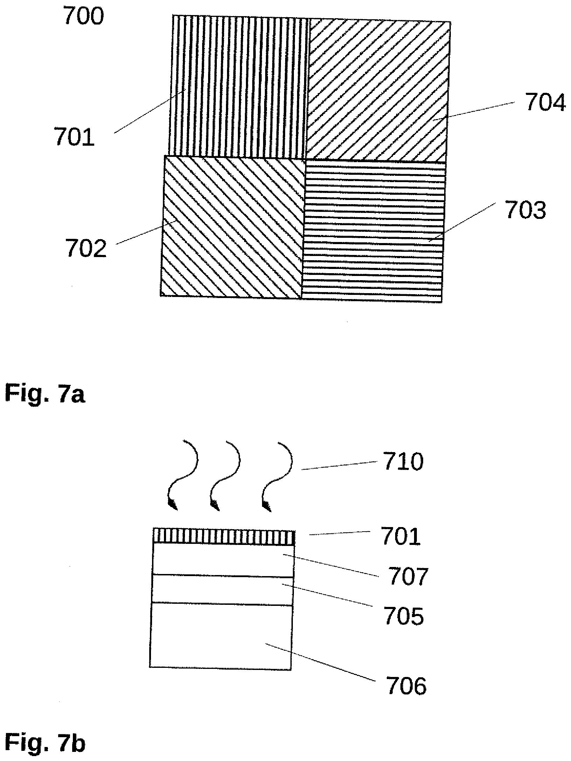

Fig. 7a: Vereinfachte Darstellung eines Polarisationssensors in Draufsicht
Fig. 7b: Möglicher Querschnitt durch ein Sensorelement eines kombiniert poiarisations- und farbempfindlichen Sensors
   700 Draufsicht auf ein Feld mit 4 Sensoren mit je unterschiedlicher Orientierung der festen, zum jeweiligen Sensorelement gehörenden Polarisationsfilter
   701 -704 unterschiedlich orientierte feste Polfilter
   705 oberflächennaher Photodetektor unter einem festen Polfilter 701 (in Silizium für kurze Wellenlängen sichtbaren Lichts)
   706 tiefer liegender Photodetektor unter einem festen Polfilter 701 und Detektor 705 (in Silizium für lange Wellenlängen sichtbaren Lichts und nahes IR)
   707 transparenter Bereich, z.B. Glas
   710 einfallendes polarisiertes Licht

Die junge Klasse von Polarisations-Drehwinkelsensoren gemäß DE102005063524 und DE 102005031966 ermöglicht es, absolute Drehwinkel justageunempfindlich und aus großer Distanz zu messen, da der Drehwinkel, anders als bei optischen Encodern, an jeder Stelle der sich drehenden Polarisationsscheibe gleichermaßen gemessen werden kann und nicht von einer örtlichen Codierung abhängt. Daher erlaubt die Polarisationsmessung die Ermittlung eines Absolutwinkels mit nur einer (analogen) Spur anstelle einer mehrspurigen (digitalen) Codescheibe. Zudem können die Drehgeber je nach Umgebungsbedingungen auch aus preiswerten Kunststoff- Folien gewonnen werden, insbesondere zugeschnitten oder ausgestanzt werden. Die 180°-Periodizität der Polarisationsmessung muss allerdings berücksichtigt werden.

Fig. 1 zeigt symbolisch einen Multiturn-Drehgeber nach dem Stand der Technik. Das angetriebene Hauptrad 100 ist als Stirnrad ausgeführt und mit einer hochaufgelösten Codescheibe 101 versehen, die von einem geeigneten Sensorarray 102 (bestehend aus kollimierter Lichtquelle, Sensor und Auswertung). Über die Verzahnung des Hauptrades werden weitere Zahnräder 110 angetrieben, die in einem Untersetzungsverhältnis zum jeweils vorigen Rad stehen, sich also stufenweise langsamer drehen. Auf diesen Zahnrädern 110 sind wiederum Codescheiben 111 angebracht, die mit Sensorarrays 112 ausgelesen werden. Die Anforderungen an Codescheiben 111 und Sensorarrays 112 sind dabei kleiner als beim Hauptrad, was durch die begrenzten mechanischen Untersetzungen einerseits und die Kosten für die Sensorik andererseits verursacht wird. Nehmen wir an, dass von einem Rad zum nächsten eine Untersetzung 8:1 vorliegt und das Getriebe 4 Zahnräder neben dem Hauptrad aufweist. Der eindeutige Zählbereich für Umdrehungen des Hauptrades 100 beträgt in diesem Fall 8^4=4096 oder 12 Bit. Für jedes Zahnrad 110 muss dabei sicher ein Zählbereich von 0..7 abgedeckt werden, so dass praktisch 4 oder gar 5 Bit Auflösung pro Rad abgetastet werden müssen. In der Gesamtheit müssen nach dem Stand der Technik also 4 weitere Codescheiben mit je 4 Sensoren und 4 kollimierten Lichtquellen präzise zueinander ausgerichtet werden (16 Lichtschranken). Die Sensorarrays 112 sind dabei so anzuordnen, dass sie nur Signale je eines Zahnrades 110 aufnehmen. Zudem ist sicherzustellen, dass der geringe Arbeitsabstand eingehalten wird. Unter Umständen sind die Sensoren daher nicht in einer Ebene angeordnet. Wenn jede Spur einer Codescheibe 101 nur 1mm breit ist, muss die Codescheibe einen Radiusbereich von mindestens 4mm umfassen. Entsprechend groß muss der ausgeleuchtete Bereich sein und das jeweilige Sensorarray selbst.

Fig. 2 zeigt den schematischen Aufbau eines elektronisch auslesbaren Zählwerks mit 4 Ziffernrädern 201 (Zählbereich 0..9999) auf einer gemeinsamen Welle 200 sowie Codescheiben 202 und optischen Absolutwertgebern bestehend aus kollimierten Lichtquellen 203 und Sensorarray 204 für jedes Ziffernrad, wobei die Sensorik durch Träger 205 in Position gehalten wird. Das mechanische (Schritt-) Getriebe ist nicht gezeigt. Um die gleichmäßig auf dem Umfang angebrachten Symbole 206 (z.B. Ziffern 0..9) eindeutig zuzuordnen, ist auch hier eine Winkelauflösung von 4 bis 5bit über 360° nötig, d.h. die Überlegungen zur Breite der Codescheibe und Größe der Sensorarrays etc. bleiben zunächst dieselben. Da beim Zählwerk eine Vielzahl von Rädern hintereinander auf einer gemeinsamen Drehachse angeordnet ist, gestaltet sich die Montage der Lichtschranken noch aufwändiger als beim Multiturngeber. Eine Vereinfachung des Aufbaus würde sich ergeben, wenn die kollimierten Lichtquellen 203 und Sensorarrays 204 an beiden Seiten des Räderwerks 202 gesammelt werden könnten. Leider ist jedoch die notwendige Breite der Codescheiben 202 so groß, dass der Radius der Scheiben deutlich vergrößert werden müsste. Um etwa 3 Räder auf einmal zu durchleuchten, müsste eines den Code nahe der Achse, eines mittig und eines den Code nahe am Umfang aufweisen, d.h. jedes Rad bräuchte eine komplexe Codescheibe mit anderem Durchmesser. Insbesondere muss ein kollimierter Lichtstrahl über fast den vollen Radius der Räder erzeugt werden, was z.B. durch ein Array von Leuchtdioden, Linsen und Blenden (je einmal pro Datenspur) realisiert werden kann.

Zudem ist es wahrscheinlich, dass jede einzelne Datenspur durch den größeren Arbeitsabstand breiter ausfallen muss, um den Code sicher auslesen zu können. Die mögliche Reduktion von Hardware und Kosten ist daher begrenzt.

Mehrere Codes auf gleichem Radius zu kombinieren ist hingegen nur mit sehr hohem Aufwand möglich, etwa durch schmalbandig absorbierende Farbcodierungen und mehrfarbige oder weiße Lichtquellen. Magnetisch ist das Auswerten mehrerer Räder hintereinander kaum möglich, da sich die Magnetfelder überlagern und auf große Distanz kaum messen lassen.

Erfindungsgemäß ergibt sich eine einfachere Konstruktion der Vorrichtung durch Verwendung von Polarisationsfiltern und Polarisationssensoren wie in Fig. 3a gezeigt. Anstelle der mehrbittigen Codescheiben werden Ringe 302 aus polarisierendem Material verwendet. Der überwiegende Teil eines jeden Rades 30 bleibt transparent, insbesondere polarisationserhaltend. Sind die Räder koaxial angeordnet, so wird jedes Rad zweckmäßigerweise einen Polfilterring auf einem anderen Radius aufweisen (302a.. d). Entsprechende Kreisscheiben lassen sich besonders preiswert aus einer einzigen Polfilterfolie stanzen (Fig. 3c).

Da die Polarisationsmessung eine analoge Absolutwinkelmessung erlaubt, ist mit einem z.B. 1mm breiten Streifen bereits eine genaue absolute Winkelmessung möglich. Die Unterscheidung der Mehrdeutigkeit (Polarisation ist 180°-periodisch) kann dabei entweder durch Hilfssignale, z.B. eine überlagerte Codierung (Transparenz, Farbe, die optische Achse versetzende optische Elemente) oder mindestens eine zusätzliche binäre Spur erfolgen (durch die z.B. insgesamt ein 2mm Radiusbereich je Rad benötigt würde). Somit können auf dem Radiusbereich, den nach dem Stand der Technik ein einziges Rad für einen 4-bit-Encoder benötigt, jetzt die Winkel von 2 oder gar 4 Rädern gemessen werden.

Eine noch weitergehende Vereinfachung ergibt sich, wenn das Räderwerk auf die 180°-Periodizität der Polarisationsmessung angepasst wird. Im Fall von manuell ablesbaren Vorrichtungen kann zu diesem Zweck die Symbolfolge (etwa Ziffern 0...9) zweimal hintereinander auf den Umfang gedruckt werden, wie in Fig. 3 a angedeutet. Das Untersetzungsgetriebe zwischen den Zählrädern sollte dann nicht mehr 10: 1 sondern 5:1 untersetzt sein. D.h. bereits nach einer halben Umdrehung des n-ten Rades dreht sich das n+1. Rad um ein Symbol weiter, jedoch im Verhältnis zu einem herkömmlichen, 360°-periodisch bedruckten Rad nur um den halben Winkel.

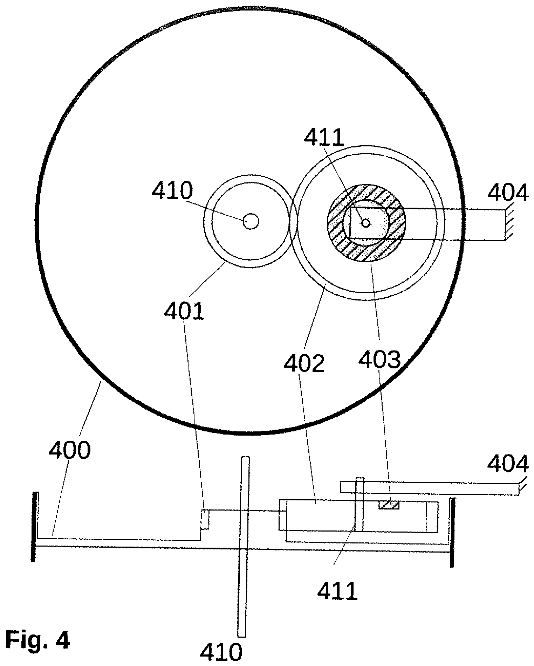

Alternativ können herkömmliche Zählräder verwendet und zusätzliche Zahnräder für jedes Zählrad vorgesehen werden, die für jede volle Umdrehung eines Zählrades nur eine halbe Umdrehung machen und somit auch mit einem 180°-periodischen Sensor eine eindeutige Messung erlauben. Fig. 4 zeigt beispielhaft eine solche Anordnung, bei der das Zählrad 400 (mit einer nicht gezeigten Zählmechanik angetrieben) auf einer Drehachse 410 eine innenliegende Verzahnung 401 aufweist und ein Zahnrad 402 mit vorzugsweise doppelter Zahnzahl antreibt, auf dem ein Polfilterring 403 angebracht ist. Eine mechanische Fixierung 404 gewährleistet dabei die Position des Zahnrades 402 auf einer eigenen kurzen Drehachse 411. Wie in Fig. 3a werden Polfilterringe mit verschiedenen Radien für die verschiedenen Zählräder verwendet, wobei durch geeignete Wahl von verschiedenen Drehzentren für unterschiedliche Zahnräder 402 auch gleiche Polfilterradien mehrfach verwendet werden können, was besonders kompakte Anordnungen erlaubt.

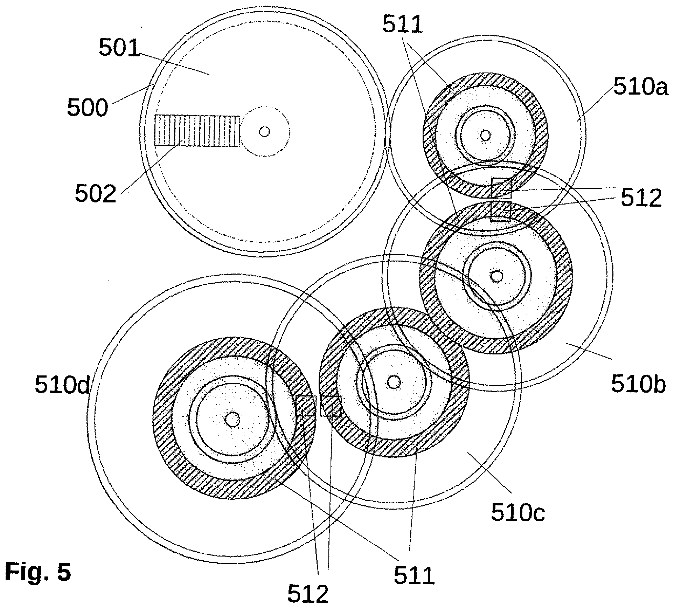

Entsprechend lassen sich auch die Getriebe von Multiturn-Drehgebern gestalten. Messungen können dabei auch im Überlappungsbereich der Zahnräder erfolgen, da der vom jeweiligen Polfilterring beanspruchte Platz geringer ist als bei Encoderscheiben. Daher können auch mehrkanalige Polarisationssensoren eingesetzt werden, die gleichzeitig den Winkel mehrerer Zahnräder erfassen. Fig. 5 zeigt das in einer Fassung ohne zusätzliche binäre Spur für 360°, d.h. nur mit Polfilterringen.

Die Wiederholung des Messsignals alle 180° kann durch die jeweils nachfolgende Getriebestufe aufgefangen werden, deren eindeutiger Zählbereich sich demnach gegenüber der Getriebeuntersetzung halbiert. Damit das funktioniert, muss die Getriebeuntersetzung mindestens 2:1 betragen, d.h. nach einer vollen Umdrehung des ersten Rades darf sich das zweite maximal eine halbe Umdrehung gedreht haben. Sinnvoll sind deutlich höhere Untersetzungen, insbesondere Vielfache von 2:1, damit je Rad mehrere Bit Zählbereich gewonnen werden, ohne dass die Anforderungen an die absolute Winkelgenauigkeit eines Sensors zu groß wird, um ohne Kalibration über die gesamte Lebensdauer des Zählers korrekte Signale liefern zu können. Im Verhältnis zu optischen Encodern verliert man also zunächst ein Bit durch die 180°-Periodizität, gewinnt durch die analoge Absolutwinkelmessung aber auf gleichem oder kleinerem Raum eine durchaus höhere Auflösung, z.B. je 8 Bit statt der in Fig. 1 und 2 gezeigten 4 oder 5 Bit.

Alternativ können die sich drehenden Polfilter auch hier wieder über separate 2:1 - Untersetzungen angetrieben werden, so dass sich die Konstruktion des eigentlichen Zählwerks nicht gegenüber klassischen Bauformen für 360°-periodische Sensoren ändert.

Der Polarisationssensor ist vorteilhaft als integrierter Polarisationssensor ausgeführt. Sein Vorteil liegt neben der Miniaturisierung und der inhärent guten Winkeltreue der integrierten Polfilter in der einfachen Integration weiterer Funktionen für Digitalisierung, Fehlerkorrektur und Kommunikation mit anderen Sensoren. Zudem erlaubt die Polarisationsmessung auf kleinstem Raum eine Justagetoleranz gegenüber dem drehbaren Polarisationsfilterring. Besonders vorteilhaft sind dabei Anordnungen mit vier jeweils um 45° verdrehten integrierten Polfiltern, wie in Fig. 7a gezeigt.

Für Vorrichtungen, bei denen am Umfang lesbare Ziffern (meist 0...9) angeordnet sind, ist die Anforderung an die Auflösung und Genauigkeit recht gering, dafür die Zahl der abzufragenden Räder oft höher (z.B. 8 bis 12). Da für die Unterbringung lesbarer Ziffern ohnehin ein gewisser Mindestradius erforderlich ist, ist hier eine mehrspurige Durchleuchtung leicht möglich. Durch geschickte Anordnung von Lichtquellen und Sensoren kann die Zahl der benötigten Leuchtdioden und Sensoren weiter minimiert werden. Mit vier LED und vier 2-kanaligen Polarisationssensoren sind bereits 8 Räder leicht auslesbar, wobei alle Sensoren auf einer gemeinsamen Platine untergebracht sein können und lediglich der Abstand von der Drehachse als Justageparameter relevant ist (Fig. 3). Die Eindeutigkeit über 360° kann auch hier wieder durch zusätzliche Spuren, überlagerte Kodierung oder 180°-periodische Bedruckung und Getriebeanpassung erzeugt werden. Bei Verwendung flacher Chip-Gehäuse, die etwa in Aussparungen einer Trägerplatine versenkt montiert werden können, ist eine Gesamtdicke der Platine von unter 1mm trotz beidseitigem Signalempfang möglich, so dass sehr kompakte Zählwerke mit geringem Aufwand realisiert werden können.

Wenn die Zahl der Zählräder hoch ist (z.B. >8), steigt nicht nur die Distanz zwischen Lichtquelle und Sensor, sondern auch die Zahl der optischen Interfaces (abwechselnd Luft und Kunststoff oder Glas). Auf diesem Wege geht einerseits Licht durch Reflexion verloren, andererseits kann es in Form von Streulicht falsche Sensoren erreichen. Streulicht kann durch geeignete Blenden von den Sensoren ferngehalten werden. Mehrfachreflexionen zwischen Lichtquelle und Polfilter sind vergleichsweise unkritisch. Reflexionen zwischen Polfilter und Sensor jedoch können einen störenderen Einfluss auf das Messergebnis haben. Auch wenn der typische Zählbereich 0..9 keine besonders hohen Anforderungen stellt, ist es u.U. hilfreich, die Zahl der zu überwindenden Interfaces zwischen Lichtquelle und Sensor zu reduzieren. Fig. 6 zeigt exemplarisch, wie eine hohe Zahl von Zählrädern mit geringem elektronischem Aufwand abgetastet werden kann. Der Vollständigkeit halber wird hier, statt wie in Fig. 4 zusätzliche Zahnräder für die 360°-Eindeutigkeit zu verwenden, die Verwendung einer zusätzlichen binären Spur gezeigt. In diesem Fall muss der Polarisationssensor in passendem Abstand auch ein Helligkeitssignal auswerten. Es kann dabei auf differentielle Spuren verzichtet werden, weil der Polarisationssensor näherungsweise die halbe Intensität des Hellsignals registriert, wenn für die Beleuchtung etwa eine unpolarisierte LED zum Einsatz kommt. Der Vergleich der binären Spur mit der vom Polarisationssensor detektierten Signal gibt daher bereits eine relative Information, die unabhängig von der Lichtstärke ist und mit großer Sicherheit ausgewertet werden kann.

Nebeneinanderliegende Sensoren können auch durch einen mehrkanaligen Sensor realisiert werden. Um LEDs einzusparen wird in Fig. 6 der Strahl einer LED für je zwei Sensorgruppen verwendet. Diese Sensorgruppen sind je zu einem 2-kanaligen Sensor zusammengefasst, der in der Mitte der Anordnung auf einer gemeinsamen Platine mit anderen Sensorgruppen so angeordnet ist, dass Signale von 8 Zählrädern erfasst werden. Durch geeignete Wahl der Sensorgehäuse (z.B. flat-packs, die in Aussparungen der Platine versenkt werden) kann die Platine samt Bestückung sehr dünn (<1.5mm) ausfallen. Durch z.B. Fräsung der Platine im Bereich des Zählrad-Außenrings kann der benötigte Abstand zwischen diesen noch weiter verringert werden, da nur geringe Anforderungen an die mechanische Steifigkeit gestellt werden. Um den seitlichen Bauraum zu reduzieren, kann eine Umlenkung des Lichtstrahls sinnvoll sein. So kann das von der Lichtquelle (LED) 605 ausgehende Licht nach Durchtritt durch eine Linse 606 mit Hilfe eines Spiegels oder Prismas 607 umgelenkt werden. Bei Verwendung einer Teilverspiegelung für 607 ist es auch möglich, einen weiteren Bereich mit einem dahinterliegenden zweiten Spiegel mit Licht zu versorgen, so dass die Zahl der Lichtquellen weiter reduziert werden kann.

Es ist vergleichsweise einfach, die analogen Sensorsignale des Polarisationssensors in einen hochaufgelösten Winkel umzuwandeln (zu digitalisieren). So ist auch eine z.B. 10-bittige Digitalisierung mit geringem Mehraufwand möglich, auch wenn konstruktionsbedingt nur 5 Bit benötigt werden. Die so entstehende Mehrinformation kann z.B. dazu verwendet werden, die Signale von verschiedenen Sensoren gegenseitig zu kontrollieren und Kalibrations- bzw. Korrekturdaten zu gewinnen. Die hochauflösende Messung bietet aber insbesondere auch die Möglichkeit, dass das Vorrichtung auch im Fall eines defekten Sensors oder einer defekten Lichtquelle weiterhin ohne Informationsverlust ausgelesen werden kann, wenn die Auflösung in Bit mehr als doppelt so hoch ist als gemäß der Getriebeuntersetzung erforderlich (z.B. 10 statt 5 Bit). Dies ist bei üblichen Vorrichtungen bzw. Multiturn-Drehgebern mit digitalen Encoderscheiben praktisch unmöglich, weil jedes weitere Bit einen erheblichen Mehraufwand erfordert.

Interessant an der hier beschriebenen Vorrichtung ist weiterhin, dass die Zählwerke rein mechanisch, d.h. ohne Stromversorgung arbeiten können, ohne dass die Gefahr eines Zählerstandsveriustes besteht. Dies ist z.B. bei schweren Maschinen wichtig, die im Falle eines elektrischen Fehlers unkontrolliert nachlaufen oder während einer Wartung bewegt werden, oder wenn Maschinen unter widrigen Bedingungen weiter bedienbar sein müssen, auch wenn elektrische Funktionen ausfallen.

Durch den deutlich reduzierten Aufwand wird es zudem attraktiv, mehrstufige Sensoren auch mit manuell ablesbaren Codescheiben auszustatten, um diese auch ohne elektronische Hilfsmittel auch im abgeschalteten Zustand auslesen zu können, bzw. bisher rein mechanische Zählwerke mit zusätzlicher Sensorik auszustatten, um Komfort oder Effizienz zu gewinnen. Messuhren für Strom, Gas und Wasser sind hierfür Beispiele, aber auch bei Seilzug- Wegmessern oder Multiturn- Drehgebern für Spindelantriebe ist dies eine preiswerte Erweiterung der bisherigen Funktionalität.

Die Abbildungen skizzieren jeweils nur die Grundzüge einer möglichen Realisierung von Vorrichtungen bzw. Multiturn-Drehgebern mit Polarisationsmessung ohne Darstellung von mechanischen Details. Eine Vielzahl von Variationen ist denkbar und vom Fachmann leicht umzusetzen.

Je nach Anforderung an Auflösung und Genauigkeit kann auf dem Hauptrad eine beliebige Sensorik eingesetzt werden. Insbesondere kann statt eines hochauflösenden optischen Encoders auch ein Polarisationssensor oder auch ein magnetischer Sensor verwendet werden.

Die Verwendung von Durchiicht-Sensorik für die Polarisationsmessung ist vorteilhaft, aber nicht zwingend. Es kann auch mit Hilfe von Reflektoren hinter den Polfiltern eine reflektive Sensorik verwendet werden.

Wird für die 360°-Erweiterung der Polarisationsmessung auf eine zusätzliche Farbcodierung zurückgegriffen, gibt es verschiedene Wege, die Farbmessung in die Polarisationsmessung zu integrieren, um Sensorfläche zu sparen und so die Farbcodierung auch mit der Polarisationsmessung zu verbinden. Neben Farbfiltern über einem Photodetektor, z.B. durch Farbschichten oder optische Resonatoren realisiert, lassen sich Photoströme verschieden tief liegender Photodetektoren in einem Halbleiter in Relation setzen. Da die Eindringtiefe von kurzweiligem Licht sehr viel kleiner ist als die von infrarotem Licht, ist z.B. ein Detektorstapel aus einem diffundierten Detektor und einem implantierten Detektor in üblichen Halbleitertechnologien ohne großen Aufwand realisierbar. Entsprechende Sensoren werden vereinzelt für Kameraanwendungen verwendet. Ein solcher Sensorstapel könnte die Farbinformation auf einer eigenen Signalspur auf dem Rad messen. Flächengünstiger ist jedoch die Überlagerung von Farb- und Polarisationsinformation, bei der etwa je Halbkreis nur eine von zwei Farben zum Sensor gelangt und dieser beide Messungen auf gleichem Raum durchfühlt. Dies kann durch eng benachbarte Sensoren für Polarisation und Farbe geschehen, aber auch durch einen farbempfindlichen Sensorstapel, der von einem festen Polfilter bedeckt ist. Fig. 7b zeigt dies im Querschnitt durch eine solche Anordnung.

Die Vorzüge des Einsatzes der Polarisationsmessung sind zusammengefasst:
- wahlfreier Radius der Polarisationsringe
- Winkelmessung kann an jeder Stelle des Polarisationsrings geschehen, der Sensor kann auch verdreht montiert sein (z.B. elektronische (digitale) Korrektur des Montagewinkels)
- reduzierter Radiusbereich durch Absolutwinkelmessung
- dadurch kleinere Räder möglich
- Messbarkeit auf große Distanz erlaubt Messung an hintereinanderliegenden Rädern
- dadurch entsteht die Möglichkeit, mit einem Sensorarray den Drehwinkel mehrerer Räder zu erfassen
- die Auflösung der Polarisationsmessung hängt nur von der Signalverarbeitung ab und kann deutlich größer sein als bei optischen Encodern
- Der Nachteil der 180°-Periodizität kann wahlweise mit einem Hilfssignal, z.B. einer zusätzlichen Digitalspur oder einer der Polarisation überlagerten Information umgangen werden, oder aber durch die Getriebeauslegung aufgefangen werden (etwa durch Hilfs-Zahnräder mit 2:1 -Untersetzung oder durch Reduktion des Zählbereichs der nachfolgenden Getriebestufe).

## Patentansprüche

1. Vorrichtung mit mehr als einem drehbaren Rad (301a-d), mindestens einer Lichtquelle (303) und mehr als einem Polarisationssensor (304), wobei die Räder (301) zumindest teilweise transparent und polarisationserhaltend sind, wobei Teile der Räder als Polfilter (302a-d) ausgestaltet sind, wobei sich die Räder zumindest teilweise überlappen, wobei von der Lichtquelle ausgehendes Licht durch die Polfilter der Räder polarisierbar und von den Polarisationssensoren empfangbar ist, wobei das Licht mehrere Räder durchdringen kann, wobei das von einem Polarisationssensor empfangene Licht nur durch eines der Polfilter polarisiert ist.

2. Vorrichtung nach Anspruch 1, **dadurch gekennzeichnet, dass** zusätzliche Codierungen auf mindestens einem Rad (301a-d) und dazu passende Sensoren vorgesehen sind, die einen über 360° eindeutigen Messbereich erzeugen.

3. Vorrichtung nach Anspruch 1, **dadurch gekennzeichnet, dass** die Räder (301) Mess-Räder sind und je mit einem drehbaren Rad mechanisch über ein Verhältnis von mindestens 1:2 verbunden sind.

4. Vorrichtung nach einem der vorangehenden Ansprüche, **dadurch gekennzeichnet, dass** ein Getriebe die Räder (301) der Vorrichtung mit einem Drehzahlverhältnis von mindestens 2:1 so verbindet, dass über mehrere volle Umdrehungen des sich am schnellsten drehenden Rades auch aus 180°- periodischen Messwerten an Rädern (301) der Vorrichtung ein eindeutiger Drehwinkel über mehrere Umdrehungen ermittelbar ist.

5. Vorrichtung nach einem der vorangehenden Ansprüche, **dadurch gekennzeichnet, dass** die Vorrichtung mechanisch arbeitet und/oder der Zustand der Vorrichtung auch ohne Elektrizität ablesbar ist.

6. Vorrichtung nach einem der vorangehenden Ansprüche mit einem zumindest teilweise transparenten Gehäuse, **dadurch gekennzeichnet, dass** die Vorrichtung teilweise einem Medium ausgesetzt ist, während andere Teile durch das Gehäuse vor dem Medium geschützt sind.

7. Vorrichtung nach einem der vorangehenden Ansprüche, **dadurch gekennzeichnet, dass** die Sensordaten verschiedener Räder (301) miteinander korreliert werden.

8. Vorrichtung nach einem der vorangehenden Ansprüche, **dadurch gekennzeichnet, dass** die Sensordaten mindestens eines Polarisationssensors mit mindestens der um die Untersetzung zum vorangehenden Rad (301a-d) höheren Auflösung als bezüglich der Umdrehungsmessung für das jeweilige Rad (301a-d) notwendig ermittelt werden, mit Mechanismen, die dazu geeignet sind, bei Ausfall eines Sensors und/oder einer Lichtquelle eine eindeutige Aussage über den Zustand der Vorrichtung aus den übrigen Sensordaten zu ermitteln.

9. Vorrichtung nach einem der vorangehenden Ansprüche, **dadurch gekennzeichnet, dass** Justagefehler von Polfilter und/oder Sensor in einer mechanischen Referenzposition der Vorrichtung durch die Sensoren messbar und als Referenzsignal nichtflüchtig speicherbar sind.

10. Vorrichtung nach einem der vorangehenden Ansprüche, **dadurch gekennzeichnet, dass** der Polarisationssensor eine Integrierte Schaltung ist.

11. Vorrichtung nach einem der vorangehenden Ansprüche mit einem Sensorbereich für Polarisation und einem neben dem Sensorbereich für Polarisation angeordneten Sensorbereich für Helligkeit, wobei zur Auswertung der Helligkeitsinformation des Helligkeitssensors die im Polarisationssensor ermittelte Helligkeit als Referenzsignal verwendet wird.

12. Vorrichtung nach einem der vorangehenden Ansprüche mit mindestens zwei Bereichen für Polarisationsmessung, wobei mehrere Sensorbereiche so angeordnet sind, dass Signale von mehreren unabhängigen Signalquellen messbar sind.

13. Vorrichtung nach einem der vorangehenden Ansprüche mit mindestens einem Sensorbereich für Polarisation und mindestens einem daneben angeordneten Sensorbereich für Helligkeit, wobei zur Auswertung einer Helligkeitsinformation die von einem Polarisationssensor ermittelte Helligkeit als Referenzsignal verwendet wird, wobei die Sensorbereiche so angeordnet sind, dass Signale von mehreren unabhängigen Signalquellen messbar sind.

14. Vorrichtung nach einem der vorangehenden Ansprüche mit mindestens einem Sensor für Polarisation und einem Sensor für Farbe auf einer gemeinsam genutzten Sensorfläche.

15. Vorrichtung nach einem der vorangehenden Ansprüche, **dadurch gekennzeichnet, dass** die zur Messung erforderliche Energie drahtlos an die Vorrichtung und/oder die gemessenen Signale drahtlos von der Vorrichtung übermittelt wird/werden.

16. Verwendung einer Vorrichtung nach einem der Ansprüche 11 bis 14 zur Messung von Drehwinkeln und/oder Umdrehungen.

## Claims

1. Device having more than one rotatable wheel (301a-d), at least one light source (303) and more than one polarization sensor (304), the wheels (301) being at least partially transparent and polarization-maintaining, parts of the wheels being configured as pole filters (302a-d), the wheels at least partially overlapping, it being possible for light which exits the light source to be polarized by the pole filters of the wheels and to be received by the polarization sensors, it being possible for the light to penetrate a plurality of wheels, and the light which is received by a polarization sensor being polarized by just one of the pole filters.

2. Device according to Claim 1, **characterized in that** additional coding elements on at least one wheel (301a-d) and sensors which match them and generate an unambiguous measuring range over 360° are provided.

3. Device according to Claim 1, **characterized in that** the wheels (301) are measuring wheels and are each connected mechanically to a rotatable wheel by means of a ratio of at least 1:2.

4. Device according to one of the preceding claims, **characterized in that** a transmission connects the wheels (301) of the device with a rotational speed ratio of at least 2:1 such that over a plurality of full revolutions of the fastest rotating wheel an unambiguous rotational angle can also be determined over a plurality of revolutions from measured values with 180° periods at wheels (301) of the device.

5. Device according to one of the preceding claims, **characterized in that** the device operates mechanically and/or the state of the device can be read off even without electricity.

6. Device according to one of the preceding claims having an at least partially transparent housing, **characterized in that** the device is partially subjected to a medium, while other parts are protected from the medium by the housing.

7. Device according to one of the preceding claims, **characterized in that** the sensor data of various wheels (301) are correlated with one another.

8. Device according to one of the preceding claims, **characterized in that** the sensor data of at least one polarization sensor are determined with at least the resolution which is higher by the step-down ratio with respect to the preceding wheel (301a-d) as necessary with respect to the revolution measurement for the respective wheel (301a-d), having mechanisms which are suitable, given failure of a sensor and/or a light source, for determining unambiguous information about the state of the device from the other sensor data.

9. Device according to one of the preceding claims, **characterized in that** adjustment errors of the pole filter and/or sensor can be measured in a mechanical reference position of the device by means of the sensors and can be stored in a non-volatile fashion as a reference signal.

10. Device according to one of the preceding claims, **characterised in that** the polarisation sensor is an integrated circuit.

11. Device according to one of the preceding claims having a sensor range for polarization and a sensor range for brightness, arranged next to the sensor range for polarization, wherein the brightness determined in the polarization sensor is used as a reference signal for the evaluation of the brightness information of the brightness sensor.

12. Device according to one of the preceding claims, having at least two ranges for polarisation measurement, a plurality of sensor ranges being arranged in such a way that signals from a plurality of independent signal sources can be measured.

13. Device according to one of the preceding claims having at least one sensor range for polarization and at least one sensor range for brightness arranged next to the latter, wherein the brightness determined by a polarization sensor is used as a reference signal for the evaluation of a brightness information item, wherein the sensor ranges are arranged in such a way that signals from a plurality of independent signal sources can be measured.

14. Device according to one of the preceding claims having at least one sensor for polarization and one sensor for color on a commonly used sensor area.

15. Device according to one of the preceding claims, **characterized in that** the energy which is necessary for the measurement is transmitted in a wireless fashion to the device and/or the measured signals are transmitted in a wireless fashion by the device.

16. Use of a device according to one of Claims 11 to 14 for measuring rotational angles and/or revolutions.

## Revendications

1. Dispositif comportant plus d'une roue tournante (301a-d), au moins une source lumineuse (303) et plus d'un capteur de polarisation (304),
dans lequel les roues (301) sont au moins partiellement transparentes et conservent la polarisation, dans lequel des parties des roues sont configurées sous forme de filtres polarisants (302ad), dans lequel les roues se chevauchent au moins partiellement, dans lequel la lumière émise par la source lumineuse peut être polarisée par les filtres polarisants des roues et peut être reçue par les capteurs de polarisation, dans lequel la lumière peut passer à travers plusieurs roues, dans lequel la lumière reçue par un capteur de polarisation n'est polarisée que par un seul des filtres polarisants.

2. Dispositif selon la revendication 1, **caractérisé en ce que** des codages supplémentaires sont prévus sur au moins une roue (301a-d) et **en ce que** des capteurs correspondants génèrent une plage de mesure non ambiguë sur 360°.

3. Dispositif selon la revendication 1, **caractérisé en ce que** les roues (301) sont des roues de mesure et sont chacune reliées mécaniquement à une roue tournante selon un rapport d'au moins 1:2.

4. Dispositif selon l'une des revendications précédentes, **caractérisé en ce qu'**une transmission relie les roues (301) du dispositif selon un rapport de vitesse de rotation d'au moins 2:1 de telle sorte que sur une pluralité de tours complets de la roue tournant le plus rapidement, un angle de rotation non ambigu sur une pluralité de tours peut également être déterminé à partir de valeurs de mesure ayant une période de 180° sur les roues (301) du dispositif.

5. Dispositif selon l'une des revendications précédentes, **caractérisé en ce que** le dispositif fonctionne mécaniquement et/ou **en ce que** l'état du dispositif peut également être lu sans électricité.

6. Dispositif selon l'une des revendications précédentes comportant un boîtier au moins partiellement transparent, **caractérisé en ce que** le dispositif est partiellement exposé à un milieu, tandis que d'autres parties sont protégées du milieu par le boîtier.

7. Dispositif selon l'une des revendications précédentes, **caractérisé en ce que** les données de capteurs de différentes roues (301) sont corrélées les unes aux autres.

8. Dispositif selon l'une des revendications précédentes, **caractérisé en ce que** les données de capteurs d'au moins un capteur de polarisation sont déterminées avec au moins la résolution augmentée de la réduction par rapport à la roue précédente (301a-d), de manière qu'elle soit supérieure à celle nécessaire pour la mesure du nombre de tours de la roue respective (301a-d), au moyen de mécanismes qui conviennent pour déterminer une indication non ambiguë de l'état du dispositif, en cas de défaillance d'un capteur ou d'une source lumineuse à partir des données de capteurs restantes.

9. Dispositif selon l'une des revendications précédentes, **caractérisé en ce que** des erreurs de réglage du filtre polarisant et/ou du capteur peuvent être mesurées par les capteurs à une position de référence mécanique du dispositif et enregistrées de manière non-volatile en tant que signal de référence.

10. Dispositif selon l'une des revendications précédentes, **caractérisé en ce que** le capteur de polarisation est un circuit intégré.

11. Dispositif selon l'une des revendications précédentes, présentant une zone de capteurs de polarisation et une zone de capteurs de luminosité adjacente à la zone de capteurs de polarisation, dans lequel la luminosité déterminée dans le capteur de polarisation est utilisée en tant que signal de référence pour évaluer les informations de luminosité du capteur de luminosité.

12. Dispositif selon l'une des revendications précédentes, comportant au moins deux zones de mesure de polarisation, dans lequel plusieurs zones de capteurs sont disposées de manière à ce que des signaux provenant de plusieurs sources de signaux indépendantes puissent être mesurés.

13. Dispositif selon l'une des revendications précédentes, comportant au moins une zone de capteurs de polarisation et au moins une zone de capteurs de luminosité adjacente à celle-ci, dans lequel la luminosité déterminée par un capteur de polarisation est utilisée en tant que signal de référence pour évaluer une information de luminosité, dans lequel les zones de capteurs sont disposées de manière à ce que des signaux provenant d'une pluralité de sources de signaux indépendantes puissent être mesurés.

14. Dispositif selon l'une des revendications précédentes, comportant au moins un capteur de polarisation et un capteur de couleur sur une surface de capteur commune.

15. Dispositif selon l'une des revendications précédentes, **caractérisé en ce que** l'énergie nécessaire à la mesure est transmise sans fil au dispositif et/ou **en ce que** les signaux mesurés sont transmis sans fil par le dispositif.

16. Utilisation d'un dispositif selon l'une des revendications 11 à 14 pour mesurer des angles de rotation et/ou des nombres de tours.
